# EUROPEAN PATENT APPLICATION

(11) **EP 4 782 770 A1**
(43) Date of publication of application: **29.07.2026**
(21) Application number: 25305084.3
(22) Date of filing: 23.01.2025
(51) Int. Cl.: F25J 3/02, F25J 3/06

(54) **CRYOGENIC RECOVERY OF CARBON DIOXIDE**

(71) Applicant: Technip Energies France, 92741 Nanterre Cedex (FR)
(72) Inventor: VOVARD, Sylvain, 1210 Brussels (BE); ELSEVIERS, Wim Frans, 1210 Brussels (BE); KALOUTSI, Marianna, 1210 Brussels (BE); PARADOWSKI, Henri, 1210 Brussels (BE)
(74) Representative: Edson, Russell Gregory

(57) **Abstract**

A process or system for cryogenic recovery of carbon dioxide (CO₂). The process or system may involve separating process gases containing CO₂ and various other gases utilizing an integrated refrigeration scheme and achieving moderate to high capture rates of CO₂. The process or system may provide for a reduction in the carbon footprint and an improvement in process efficiencies for CO₂ removal from process streams.

## Description

### Technical Field

The present disclosure relates generally to methods and systems for cryogenic recovery of carbon dioxide (CO₂). The disclosure can involve an integrated system to separate process gases containing CO₂ and various other gases and achieve moderate to high capture rates of CO₂. In addition, but not by way of limitation, this disclosure relates to methods to reduce the carbon footprint and improve process efficiencies for CO₂ removal.

### Background

Reduction and capture of CO₂ from process streams is of great interest in order to combat climate change by minimizing the release of greenhouse gases. Recovery of the CO₂ from gas streams can be achieved through a number of different technologies. One technology that is gaining attention is the removal of the CO₂ from a process gas containing CO₂, CO, H₂, light hydrocarbons, water, and/or inert gases using cryogenic technology. However, improved methods of reducing the carbon footprint and improving process efficiencies for CO₂ removal from process gases are desirable.

### Summary

One or more embodiments involve a process for recovering CO₂, comprising: providing a feed stream comprising CO₂, compressing the feed stream to produce a compressed feed stream comprising CO₂, optionally cooling the compressed stream comprising CO₂, optionally drying the compressed feed stream to produce a dried stream comprising CO₂, cooling the stream comprising CO₂ in a multi-stream heat exchanger to at least partially condense the dried stream into a first liquid condensate stream comprising CO₂ and a first cold gas stream, separating the first cold gas stream and the first liquid condensate stream, optionally de-pressurizing the first liquid condensate stream, optionally cooling the first liquid condensate stream, evaporating and separating the first liquid condensate stream to produce a second cold gas stream and a second liquid condensate stream comprising CO₂, optionally distilling the second liquid condensate stream to produce an overhead stream and a bottoms stream comprising CO₂, and recovering the CO₂ product from the bottoms stream. One or more embodiments relate to the embodiments above, further comprising (a) condensing a mixed refrigerant at a first pressure, (b) subcooling the mixed refrigerant below its condensation temperature at the first pressure to produce a subcooled mixed refrigerant, (c) expanding a first portion of the subcooled mixed refrigerant at a second pressure lower than the first pressure, and evaporating the expanded subcooled mixed refrigerant against the dried stream comprising CO₂ to produce a cooled dried stream comprising CO₂, and (d) expanding a second portion of the subcooled mixed refrigerant at a third pressure lower than the second pressure and evaporating the expanded subcooled mixed refrigerant against the cooled dried stream comprising CO₂.

One or more embodiments relate to the embodiments above, wherein the mixed refrigerant is subcooled at the first pressure against one or more cold streams comprising at least one of: (a) the first cold gas stream, (b) the second cold gas stream, (c) the second condensate or the bottoms stream from the distillation, (d) the overhead stream of the distillation, or (e) any combinations thereof.

One or more embodiments relate to the embodiments above, wherein at least a portion of the dried stream comprising CO₂ is further cooled below the minimum refrigeration cycle achievable temperature against at least a portion of the bottom stream from the distillation.

One or more embodiments relate to the embodiments above, wherein at least a portion of the subcooled mixed refrigerant is expanded at the third pressure, and evaporated against the first cold gas stream.

One or more embodiments relate to the embodiments above, further comprising separating the first cold gas stream to generate a first CO₂-depleted stream and a third condensate, heating the first CO₂-depleted stream, and recovering the third condensate and optionally route the third condensate to the distillation.

One or more embodiments relate to the embodiments above, wherein the overhead from the distillation is used to subcool the mixed refrigerant.

One or more embodiments relate to the embodiments above, further comprising cooling the compressed feed stream using the second liquid condensate stream or the bottoms stream.

One or more embodiments relate to the embodiments above, further comprising recycling the first cold gas stream, the second cold gas stream, the overhead stream, or any combination thereof to the compression step.

One or more embodiments related to the embodiments above and involve a system for recovering CO₂, comprising: a compressor configured for compressing a feed stream comprising CO₂ to produce a compressed stream comprising CO₂, optionally a first heat exchanger (20) for cooling the compressed stream comprising CO₂, optionally a dryer for drying the compressed stream comprising CO₂ to produce a dried stream comprising CO₂, a cold box (multi-stream heat exchanger) configured for cooling the stream comprising CO₂ and using the refrigeration system, wherein the refrigeration system comprises: (1) a mixed refrigerant working fluid, comprising at least two components, and (2) a refrigerant loop with at least two different pressure levels, a first phase separator configured to produce a first cold gas stream and a first condensate comprising CO₂, optionally an expansion device configured to expand the first condensate from the first phase separator, a second phase separator configured to produce a second cold gas stream and a second condensate comprising CO₂, and optionally a distillation column configured to produce an overhead stream and a bottom stream comprising CO₂.

One or more embodiments relate to the embodiments above, wherein the refrigeration system is configured to: (a) condense the mixed refrigerant at a first pressure, (b) subcool the mixed refrigerant below its condensation temperature at the first pressure to produce a subcooled mixed refrigerant, (c) expand a first portion of the subcooled mixed refrigerant at a second pressure lower than the first pressure, and evaporate the expanded subcooled mixed refrigerant against the dried stream comprising CO₂ in a second heat exchanger (250) to produce a cooled dried stream comprising CO₂, and expand a second portion of the subcooled mixed refrigerant at a third pressure lower than the second pressure, and evaporate the expanded subcooled mixed refrigerant against the cooled dried stream comprising CO₂ in a third heat (280) exchanger, and wherein the second (250) and third (280) heat exchangers are arranged sequentially.

One or more embodiments relate to the embodiments above, wherein the refrigeration system is configured to subcool a part of the mixed refrigerant at the first pressure in a fourth heat exchanger (40) against one or more cold streams recovered from the system for recovering CO₂, the cold streams comprising at least one of: (a) the first cold gas stream from the first phase separator, (b) the second cold gas stream from the second phase separator, (c) the second condensate or the bottoms stream from the distillation column, (d) optionally, the overhead of the distillation column, or (e) any combinations thereof.

One or more embodiments relate to the embodiments above, wherein the refrigeration system is configured to: further cool at least a portion of the dried stream comprising CO₂ below the minimum refrigeration cycle achievable temperature against at least a portion of the bottom stream from the distillation column in a fifth heat exchanger (160), and return the cooled portion of the dried stream to the top of the phase separator as reflux.

One or more embodiments relate to the embodiments above, wherein the refrigeration system is configured to expand at least a portion of the subcooled mixed refrigerant at the third pressure, and evaporate the expanded subcooled mixed refrigerant against the first cold gas stream from the first separator in a sixth heat exchanger (300).

One or more embodiments relate to the embodiments above, wherein the refrigeration system is configured to: (a) separate the first cold gas stream from the first phase separator in a third phase separator to generate a first CO₂-depleted stream and a third condensate, (b) heat the first CO₂-depleted stream in the sixth heat exchanger (300), and (c) recover the third condensate and optionally route the third condensate to the distillation column.

One or more embodiments relate to the embodiments above, wherein the mixed refrigerant comprises CO₂.

One or more embodiments relate to the embodiments above, wherein the distillation column is operated without an overhead condenser.

One or more embodiments relate to the embodiments above, wherein the system further comprises a pump configured to pump the second condensate or a bottoms stream from the distillation column.

One or more embodiments relate to the embodiments above, wherein the cold box and first phase separator are configured to at least partially condense CO₂ in a single stage.

One or more embodiments relate to the embodiments above, wherein the dryer is a temperature swing adsorption dryer, preferably comprising an adsorbent comprising a molecular sieve, zeolite, aluminosilicate, silica gel, activated carbon, or any combinations thereof.

One or more embodiments relate to the embodiments above, wherein the compressor is a multi-stage compressor with intercooling.

One or more embodiments relate to the embodiments above, wherein the first heat exchanger (20) is configured to use at least a part of the second condensate from the second phase separator or the bottoms stream from the distillation column to chill the compressed CO₂ containing stream.

### Brief Description of the Drawings

FIG. 1 illustrates a process flow diagram for a CO₂ removal process according to some embodiments of the disclosure.
FIG. 2 illustrates a process flow diagram for a CO₂ removal process according to some embodiments of the disclosure.
FIG. 3 illustrates a process flow diagram for a CO₂ removal process according to some embodiments of the disclosure.
FIG. 4 illustrates a process flow diagram for a refrigeration circuit integrated with a CO₂ removal process according to some embodiments of the disclosure.
FIG. 5 illustrates a process flow diagram for a refrigeration circuit integrated with a CO₂ removal process according to some embodiments of the disclosure.
FIG. 6 illustrates a process flow diagram for a refrigeration circuit integrated with a CO₂ removal process according to some embodiments of the disclosure.
FIG. 7 illustrates a process flow diagram for a refrigeration circuit integrated with a CO₂ removal process according to some embodiments of the disclosure.
FIG. 8 illustrates a process flow diagram for a refrigeration circuit integrated with a CO₂ removal process according to some embodiments of the disclosure.
FIG. 9 illustrates a process flow diagram for a refrigeration circuit integrated with a CO₂ removal process according to some embodiments of the disclosure.

### Detailed Description

The disclosure describes novel processes and/or systems for the removal of the CO₂ from a process gas containing CO₂, CO, H₂, light hydrocarbons, water, and/or inert gases using cryogenic technology. The disclosed processes and systems improve the energy efficiency of the cryogenic removal in comparison to existing technologies, with moderate to high CO₂ capture rates (e.g., 85-95 % of all carbon contained in the feed gas).

The disclosure describes cryogenic CO₂ capture processes and related refrigeration circuits. More specifically, the disclosure describes cryogenic CO₂ capture units, systems, and processes, in which the CO₂ is recovered after separation from lighter components through compression and partial condensation in a cryogenic separation section using external refrigerant as described in detail for various embodiments below. Existing processes involve different cryogenic CO₂ capture units and refrigeration technologies than are described herein, and can often require complex additional CO₂ recovery downstream of the cryogenic unit.

Thus, in some embodiments, a feed gas stream comprising a process gas containing CO₂, CO, H₂, light hydrocarbons, water, and/or inert gases, can be separated into at least two streams using a cryogenic separation section:
- a stream rich in CO₂, containing preferably more than 99.5 % (by volume/mole) of CO₂
- an off-gas stream containing residual molecules, at least one from the list CO, CH₄, N₂, Ar, He, H₂, CO₂, and any combinations thereof.
The cryogenic separation section and related operations are described in detail below.

### Feed Stream

In some embodiments, the feed stream comprises CO₂, and at least one of CO, CH₄, N₂, Ar, H₂, H₂O, He, O₂, or any combinations thereof. In some embodiments, the feed stream can comprise from 5 to 98 mole% CO₂. In some embodiments, the feed stream can comprise from 0.1 mole% to 20 mole% CO. In some embodiments, the feed stream can comprise from 0.1 mole% to 20 mole% CH₄. In some embodiments, the feed stream can comprise from 0.1% to 80 mole% N₂. In some embodiments, the feed stream can comprise from 0 to 10 mole% Ar. In some embodiments, the feed stream can comprise from 0 to 10 mole% He. In some embodiments, the feed stream can comprise from 0 % to 60 mole% H₂. In some embodiments, the feed stream can comprise from 0 to 10 mole% H₂O. In some embodiments, the feed stream can comprise from 0 to 20 mole% O₂.

In some embodiments where the feed stream pressure is low, it can be compressed to high pressure. For example, the feed stream can be compressed to a pressure above 20 bar (abs) (e.g., above 25 bar (abs), above 30 bar (abs), above 35 bar (abs), above 40 bar (abs), above 50 bar (abs), above 60 bar (abs), from 20 bar (abs) to 100 bar (abs), from 20 bar (abs) to 80 bar (abs), from 20 bar (abs) to 70 bar (abs), from 20 bar (abs) to 60 bar (abs), from 20 bar (abs) to 50 bar (abs), from 20 bar (abs) to 35 bar (abs), or from 35 bar (abs) to 60 bar (abs)). In some embodiments, the feed stream is compressed until the CO₂ partial pressure is greater than 15 bar (abs) (e.g., greater than 16 bar (abs), greater than 17 bar (abs), greater than 18 bar (abs), greater than 19 bar (abs), greater than 20 bar (abs), from 15 bar (abs) to 20 bar (abs), or from 20 bar (abs) to 25 bar (abs)). In some embodiments, the compression can take place in a multistage compressor with intercooling. In some embodiments, the feed is already at a high enough pressure and/or has a high enough CO₂ partial pressure that the feed is not compressed.

### Drying

In some embodiments, the feed stream can be dried in a dryer. In some embodiments, the dryer is a temperature swing adsorption-based dryer. In some embodiments, the feed stream to the dryer can be chilled against the cold streams available from the cold process described herein in a first heat exchanger. In some embodiments, the feed stream to the dryer can be chilled while maintaining a margin above the hydrate formation of the stream. Any remaining water that is not knocked out by the chilling heat exchanger can be removed by the dryer, for example.

In some embodiments, dryer is a temperature swing adsorption dryer system that uses an adsorption process that is based on the adsorption of vapor phase water at low temperature (e.g., 10 °C to 50 °C) on a solid adsorbent selective for water. In some embodiments, the adsorbent can be a molecular sieve, zeolite, aluminosilicate, silica gel or activated carbon type of material, or any combinations thereof.

In some embodiments, the adsorbent can be regenerated by heating the adsorber bed with a hot (e.g., 150 °C to 300 °C) regeneration gas to desorb the adsorbed moisture, followed by cooling the regenerated adsorber bed. In some embodiments, the regenerated adsorber bed is cooled to the temperature at which the adsorption takes place. In some embodiments, the regenerated adsorber bed is cooled with cold regeneration gas. In some embodiments, the regeneration gas is taken, at least in part, from the treated product stream from the adsorption step of the temperature swing adsorption process.

In some embodiments, at least a portion of the first low pressure (LP) flash gas, at least a portion of the second low pressure (LP) flash gas, at least a portion of the high pressure (HP) flash gas (all described below), or any combinations thereof, can be used as a cold regeneration gas for the cooling step of the temperature swing adsorption dryer, recovering heat from a hot adsorber bed.

In some embodiments, the drying can take place after the compression step. In other embodiments, the drying can take place prior to the compression step. In some other embodiments, the drying can take place between compression steps. Following the drying, in some embodiments the dried stream can be fed to a cold box.

### Cold-box (multi-stream heat exchanger)

In some embodiments, the dried stream is (further) cooled using evaporating refrigerant in one or more passes through a cold box. In some embodiments, the cold box is a multi-stream heat exchanger. In some embodiments, the refrigerant is a mix of two or more components. In some embodiments, the refrigerant is a mix of two components. The dried stream can be cooled to a temperature that allows partial condensation of the stream, for example, generating a liquid stream, CO₂-rich condensate. In some embodiments, because water has been removed by the dryer, the condensate will comprise primarily CO₂ (e.g., more than 50 mole% CO₂, more than 60 mole% CO₂, more than 70 mole% CO₂, more than 80 mole% CO₂, or more than 90 mole% CO₂,) and optionally containing some dissolved light gases (including CH₄, CO, N₂, H₂, Ar, He, O₂, or any combinations thereof).

### Phase Separation

In some embodiments, the CO₂-rich condensate can be separated from the vapor phase in a phase separator, producing a first CO₂-rich liquid, and a first CO₂-depleted flash gas (HP flash gas). In some embodiments, the first CO₂-depleted flash gas can be used to cool down the (warmer) feed to the cold box (e.g., a multi-stream heat exchanger) and then optionally recovered as a product stream. In some embodiments, the cold box and first phase separator are configured to at least partially condense CO₂ in a single stage (e.g., without sequential flash operations, for example two or more flashes in series on the gas side). In some embodiments, the first CO₂-depleted flash gas can be at least partially (e.g., at least 10 %, at least 20 %, at least 30 %, at least 40 %, at least 50 %, at least 60 %, at least 70 %, at least 80 %, at least 90 %, or 95 %) recycled to the compression stage.

In some embodiments, the CO₂-rich condensate separated from the first CO₂-depleted flash gas has sufficient purity and can be used as a product stream. However, in most embodiments, the CO₂-rich condensate is subjected to a further cryogenic purification. Also, in some embodiments, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich condensate (or collection of multiple condensates, in embodiments that involve multiple cycles of cooling-condensing-separation) is optionally reheated in a heat exchanger (e.g., the first heat exchanger or the cold box). In some embodiments, the optionally reheated separated CO₂-rich condensate(s) can then be expanded to a lower pressure, which allows further cooling (e.g., cooling to temperature above - 56 °C). The cooled CO₂-rich stream can, in some embodiments, be partially evaporated (e.g., in an evaporator) and separated (e.g., in a phase separator) into at least one vapor phase and at least one liquid phase. In some embodiments, the generated vapor phase (first LP flash gas) is separated from the liquid phase (second CO₂-rich condensate) in a second phase separator without additional hot or cold energy supplied. However, in some embodiments, additional hot or cold energy can be used. The second CO₂-rich condensate is recovered as CO₂ product. In some embodiments the second CO₂-rich condensate is recovered as CO₂ product without any refrigeration recovered from the condensate. Optionally, this CO₂ product can be pumped as liquid to a desired export pressure. In some embodiments, after or without pumping, this CO₂ product can be heated to partially cool down the dried gas stream, while remaining in liquid phase. In some embodiments, this CO₂ product can (also) be used to cool down the feed to the Temperature Swing Adsorption Dryer unit.

### Cryogenic Distillation

In some embodiments where the purity of the second CO₂-rich condensate is insufficient, the second CO₂-rich condensate can be directed to a distillation column. In the distillation, the bottom is heated and at least partially vaporized in a reboiler, generating vapor circulation, for example. In some embodiments, no condenser for the partial (or full) condensation of the vapor product is utilized. Without a condenser, the entire cold overhead stream (second LP flash gas) from the column can, in some cases, be used as refrigerant for the incoming feed gas instead of (or in addition to) requiring refrigeration duty. However, some embodiments use a condenser for partial or full condensation of the vapor product. In some embodiments, the reboiler duty is supplied by the warm feed gas and can be integrated within the aforementioned cold box (multi-stream heat exchanger). In some embodiments, the liquid column product can either be extracted as final CO₂ product or in some other embodiments can be pumped and exported, or pumped, heated, and then exported as a liquid product.

In some embodiments, at least a portion of the first LP flash gas, at least a portion of the second LP flash gas, or any combination of at least a portion of both, can be used to cool down the warm dried gas feed. In some embodiments, at least a portion of the first LP flash gas, at least a portion of the second LP flash gas, or any combination of at least a portion of both can be fully or partially recycled to the feed and/or an interstage of the multistage compressor after heating.

In some embodiments, at least a portion of the first LP flash gas, at least a portion of the second LP flash gas, or any combination of at least a portion of both, can be used as regeneration gas for the Temperature Swing Adsorption Dryer.

### Recovery of Light Gases

The HP flash gas and LP flash gas (e.g., first LP flash gas, second LP flash gas, third LP flash gas, etc) streams generated by different embodiments can be treated in different ways. For example, in some embodiments requiring only a moderate CO₂ product purity, the bottom purification step can be omitted. However, if downstream operations require an improved CO₂ purity, the bottom purification section can be included. For systems requiring a moderate CO₂ capture rate (e.g., 60 to 90 % of incoming CO₂ or 80 to 85 % of incoming CO₂,), the HP flash gas can be sent to the battery limit and used as fuel, for example. In embodiments where a higher CO₂ capture rate is required by downstream operations (e.g., above 80 % of incoming CO₂, above 85 % of incoming CO₂, above 90 % of incoming CO₂, above 95 % of incoming CO₂, above 98 % of incoming CO₂, from 85 % to 99.99 % of incoming CO₂), the LP flash gas recycle and/or the HP flash gas recycle options can optionally be implemented, increasing the overall CO₂ capture rate (e.g., to above 80 % of incoming CO₂, above 85 % of incoming CO₂, above 90 % of incoming CO₂, above 95 % of incoming CO₂, above 98 % of incoming CO₂, from 90 % to 93 % of incoming CO₂, or from 85 % to 99.5 % of incoming CO₂), by the addition of the recycle compression equipment. Further extension with additional purification and/or recovery units on the HP flash gas and/or LP flash gas streams can be considered when even higher CO₂ capture rates (e.g., above 90 % of incoming CO₂, above 93 % of incoming CO₂, above 95 % of incoming CO₂, above 97 % of incoming CO₂, above 98 % of incoming CO₂, from 93.% to 99.5 % of incoming CO₂, or from 95 % to 99.9 % of incoming CO₂), are desired in certain embodiments. Thus, the disclosed system can be modularly constructed and expanded as desired CO₂ capture requirements change and evolve over time.

### CO₂ Removal Systems and Process Examples

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure. In all of the following, a same reference designates a stream flowing in a conduit and the conduit which conveys this stream.

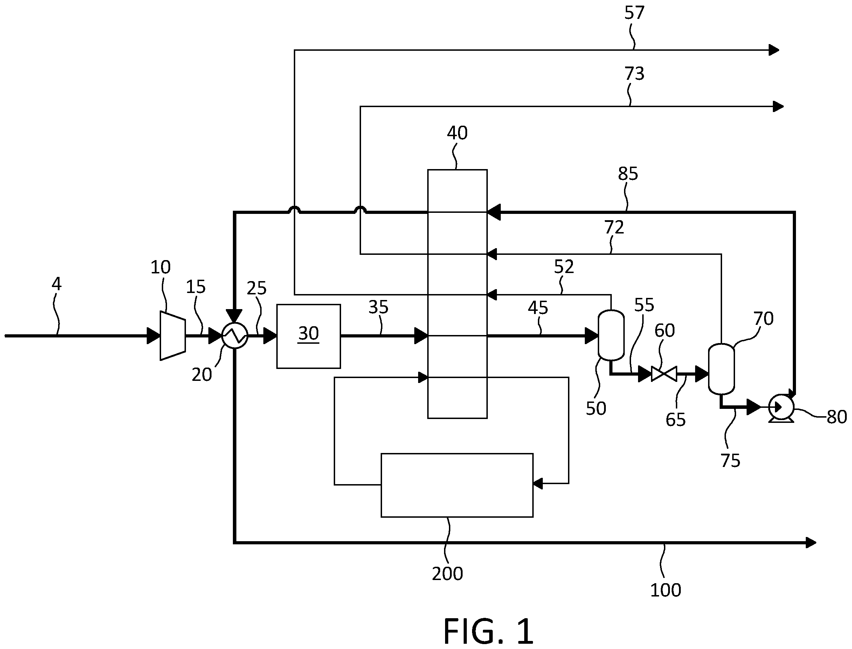

FIG. 1 illustrates some embodiments of the disclosure. In FIG. 1, a CO₂-containing feed stream 4 is purified. In some embodiments, in addition to CO₂, the feed stream also comprises at least one of CO, CH₄, He, N₂, O₂, Ar, H₂, H₂O, or any combinations thereof.

The feed stream 4 is compressed to higher pressure in at least one compressor 10 to produce a compressed feed stream 15. In some embodiments, the compression can take place in a multistage compressor with intercooling.

The compressed feed stream 15 can be chilled in a first heat exchanger 20 (e.g., chilled by cold streams available from the cold process described below) to produce chilled compressed feed stream 25. The chilled compressed feed stream 25 can be dried in a dryer 30 (e.g., a temperature swing adsorption dryer) to produce a dried feed stream 35. As such, residual water in the feed stream 4 that is not liquified in the compression process or the first heat exchanger 20 (and removed by a knock-out drum upstream of the dryer (not shown in FIG. 1)) can be removed by the dryer 30, for example.

Following the drying, in some embodiments the dried stream 35 can be fed to a cold box (multi-stream heat exchanger) 40. The dried stream 35 is at least partially cooled using a refrigeration package 200 in one or more passes through the cold box 40 to produce a partially condensed mixed phase stream 45, with the condensate enriched in CO₂. In some embodiments, because water has been removed by the dryer, the condensate will comprise primarily CO₂ (e.g., more than 50 mole% CO₂, more than 60 mole% CO₂, more than 70 mole% CO₂, more than 80 mole% CO₂, or more than 90 mole% CO₂,) and optionally containing some dissolved light gases (including CH₄, CO, N₂, Ar, He, O₂, and combinations thereof).

In some embodiments, the CO₂-rich condensate of the partially condensed stream 45 can be separated from the vapor phase in a phase separator 50, producing a first CO₂-rich liquid 55, and a first CO₂-depleted flash gas 52 (HP flash gas). In some embodiments, the first CO₂-depleted flash gas 52 can be used to at least partially cool down the (warmer) dried stream feed 35 to the cold box 40 and then optionally recovered as a product stream 57.

In some embodiments not shown in FIG. 1, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich liquid condensate 55 (or collection of multiple condensates, in embodiments (not shown) that involve multiple cycles of cooling-condensing-separation) is optionally reheated in a heat exchanger (not shown), and expanded to a lower pressure with expansion device 60 (e.g., a valve, expander) to produce a lower pressure CO₂-rich liquid condensate 65, which can be further cooled in some embodiments (not shown). The lower pressure CO₂-rich liquid condensate 65 can be partially evaporated and separated in a second phase separator 70 into at least one vapor phase 72 and at least one liquid phase 75. In some embodiments, the generated vapor phase 72 (first LP flash gas) is separated from the liquid phase 75 (second CO₂-rich condensate) in the second phase separator 70 without additional hot or cold energy supplied. The generated vapor phase 72 (first LP flash gas) can (also) be used to at least partially cool down the (warmer) dried stream feed 35 to the cold box 40 and then optionally recovered as a product stream 73. Optionally, the liquid phase 75 (second CO₂-rich condensate) can be pumped in at least one pump 80 as liquid to a desired CO₂ product pressure. The pumped CO₂ product 85 can be used to cool down the compressed feed stream 15 before the temperature swing adsorption dryer unit 30 in the first heat exchanger 20 and then recovered as CO₂ product stream 100. In some embodiments not shown in FIG. 1, after or without pumping, the CO₂ stream 85 can be heated to partially cool down the dried gas stream 35, while remaining in liquid phase. In some embodiments also not shown in FIG. 1, the second CO₂-rich condensate 75 (or 85) is recovered as CO₂ product without any refrigeration recovered from the condensate.

In some embodiments not shown in FIG. 1, at least a portion of the first LP flash gas and/or at least a portion of the HP flash gas, can be used as a cold regeneration gas for a cooling step of the regeneration of the temperature swing adsorption dryer, recovering heat from a hot adsorber bed.

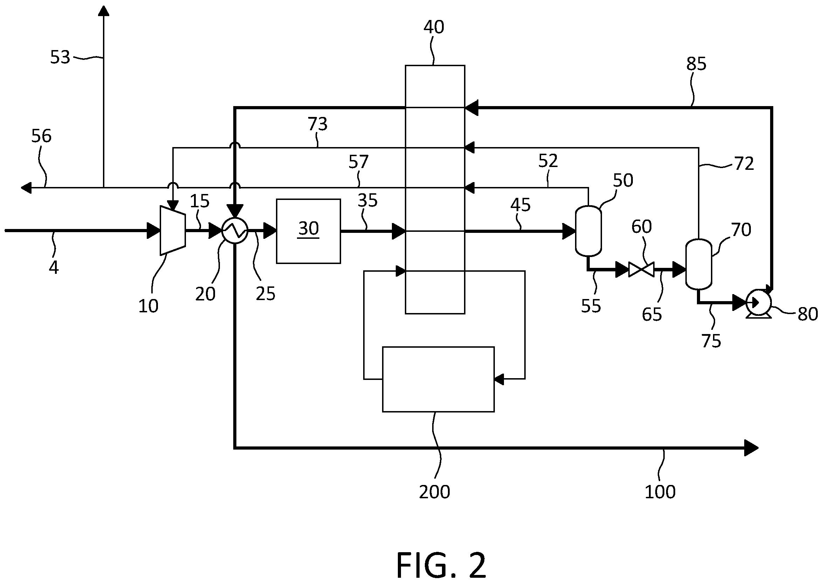

FIG. 2 illustrates some additional embodiments of the disclosure that include recycle options. In FIG. 2, a CO₂-containing feed stream 4 is again purified. The feed stream 4 is compressed to higher pressure in at least one compressor 10 (e.g., a single compressor or a multistage compressor with intercooling) to produce a compressed feed stream 15.

The compressed feed stream 15 can be chilled in a first heat exchanger 20 (e.g., chilled by cold streams available from the cold process described below) to produce chilled compressed feed stream 25. The chilled compressed feed stream 25 can be dried in a dryer 30 (e.g., a temperature swing adsorption dryer) to produce a dried feed stream 35. As such, residual water in the feed stream 4 that is not liquified in the compression process or the first heat exchanger 20 can be removed by the dryer 30, for example.

Following the drying, the dried stream 35 can be fed to a cold box (e.g., a multi-stream heat exchanger) 40. The dried stream 35 is at least partially cooled using a refrigeration package 200 in one or more passes through the cold box 40 to produce a partially condensed mixed phase stream 45, with the condensate enriched in CO₂.

In some embodiments, the CO₂-rich condensate of the partially condensed stream 45 can be separated from the vapor phase in a phase separator 50, producing a first CO₂-rich liquid 55, and a first CO₂-depleted flash gas 52 (HP flash gas). In some embodiments, the first CO₂-depleted flash gas 52 (HP flash gas) can be used to at least partially cool down the (warmer) dried stream feed 35 to the cold box 40 to form a warmed first CO₂-depleted flash gas 57 (HP flash gas) stream. As shown in FIG. 2, this warmed first CO₂-depleted flash gas 57 (HP flash gas) stream can be at least partially (stream 56) (e.g., at least 10 %, at least 20 %, at least 30 %, at least 40 %, at least 50 %, at least 60 %, at least 70 %, at least 80 %, at least 90 %, at least 95 %, or 100%) recycled upstream. The rest of the first CO₂-depleted flash gas passing through the cold box stream 57 can optionally recovered as a product stream 53.

In some embodiments not shown in FIG. 2, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich liquid condensate 55 (or collection of multiple condensates, in embodiments (not shown) that involve multiple cycles of cooling-condensing-separation) is optionally reheated in a heat exchanger (not shown), and expanded to a lower pressure with expansion device 60 to produce a lower pressure CO₂-rich liquid condensate 65, which can be further cooled in some embodiments (not shown). The lower pressure CO₂-rich liquid condensate 65 can be partially evaporated and separated in a second phase separator 70 into at least one vapor phase 72 and at least one liquid phase 75. In some embodiments, the generated vapor phase 72 (first LP flash gas) is separated from the liquid phase 75 (second CO₂-rich condensate) in the second phase separator 70 without additional hot or cold energy supplied. The generated vapor phase 72 (first LP flash gas) can (also) be used to at least partially cool down the (warmer) dried stream feed 35 to the cold box 40 and then at least partially recycled as a warmed stream 73 back to the compressor 10. Optionally, the liquid phase 75 (second CO₂-rich condensate) can be pumped in at least one pump 80 as liquid to a desired CO₂ product pressure. The pumped CO₂ product 85 can be used to cool down the compressed feed stream 15 before the temperature swing adsorption dryer unit 30 in the first heat exchanger 20 and then recovered as CO₂ product stream 100. In some embodiments not shown in FIG. 2, after or without pumping, the CO₂ stream 85 can be heated to partially cool down the dried gas stream 35, while remaining in liquid phase. In some embodiments also not shown in FIG. 2, the second CO₂-rich condensate 75 (or 85) is recovered as CO₂ product without any refrigeration recovered from the condensate.

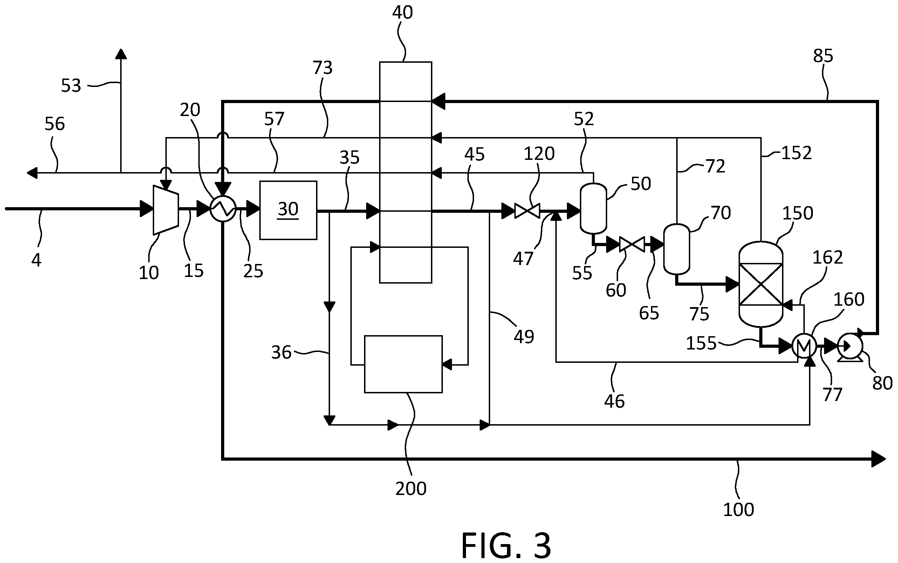

FIG. 3 illustrates some additional embodiments of the disclosure that include recycle options and additional bottom purification. In FIG. 3, a CO₂-containing feed stream 4 is again purified. The feed stream 4 is compressed to higher pressure in at least one compressor 10 (e.g., a single compressor or a multistage compressor with intercooling) to produce a compressed feed stream 15.

The compressed feed stream 15 can be chilled in a first heat exchanger 20 (e.g., chilled by cold streams available from the cold process described below) to produce chilled compressed feed stream 25. The chilled compressed feed stream 25 can be dried in a dryer 30 (e.g., a temperature swing adsorption dryer) to produce a dried feed stream 35. As such, residual water in the feed stream 4 that is not liquified in the compressor 10 or the first heat exchanger 20 can be removed by the dryer 30, for example.

Following the drying, the dried stream 35 can be fed to a cold box (e.g., a multi-stream heat exchanger) 40. The dried stream 35 is at least partially cooled using a refrigeration package 200 in one or more passes through the cold box 40 to produce a partially condensed mixed phase stream 45, with the condensate enriched in CO₂.

In some embodiments, the partially condensed mixed phase stream 45 can be expanded to a lower pressure with expansion device 120 to produce a lower pressure mixed phase stream 47. The CO₂-rich condensate of the mixed phase stream 47 can be separated from the vapor phase in a phase separator 50, producing a first CO₂-rich liquid 55, and a first CO₂-depleted flash gas 52 (HP flash gas). In some embodiments, the first CO₂-depleted flash gas 52 (HP flash gas) can be used to at least partially cool down the (warmer) dried stream feed 35 to the cold box 40 to form a warmed first CO₂-depleted flash gas 57 (HP flash gas) stream. As shown in FIG. 3, this warmed first CO₂-depleted flash gas 57 (HP flash gas) stream can be at least partially (Stream 56) (e.g., at least 10 %, at least 20 %, at least 30 %, at least 40 %, at least 50 %, at least 60 %, at least 70 %, at least 80 %, at least 90 %, or 100 %) recycled upstream The rest of the first CO₂-depleted flash gas passing through the cold box stream 57 can optionally recovered as a product stream 53.

In some embodiments not shown in FIG. 3, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich liquid condensate 55 (or collection of multiple condensates, in embodiments (not shown) that involve multiple cycles of cooling-condensing-separation) is optionally reheated in a heat exchanger (not shown), and expanded to a lower pressure with expansion device 60 to produce a lower pressure CO₂-rich liquid condensate 65, which can be further cooled in some embodiments (not shown). The lower pressure CO₂-rich liquid condensate 65 can be partially evaporated and separated in a second phase separator 70 into at least one vapor phase 72 and at least one liquid phase 75. In some embodiments, the generated vapor phase 72 (first LP flash gas) is separated from the liquid phase 75 (second CO₂-rich condensate) in the second phase separator 70 without additional hot or cold energy supplied. The generated vapor phase 72 (first LP flash gas) can (also) be used to at least partially cool down the (warmer) dried stream feed 35 to the cold box 40 and then at least partially recycled as a warmed stream 73 back to the compressor 10.

As shown in FIG. 3, the liquid phase 75 (second CO₂-rich condensate) can be directed to a distillation column 150 for further purification. In the distillation column 150, the bottoms is heated and at least partially vaporized in a reboiler 160, generating vapor recirculation stream 162, for example. The overhead stream 152 (second LP flash gas) from the distillation column 150 and the generated vapor phase 72 (first LP flash gas) from the second phase separator 70, either separately or combined, be used to at least partially cool down the (warmer) dried stream feed 35 to the cold box 40 and then at least partially recycled as a warmed stream 73 back to the compressor 10. In some embodiments, no condenser for the partial (or full) condensation of the vapor product is utilized in the column 150. In some embodiments not shown in FIG. 3, without a condenser, the entire overhead stream 152 (second LP flash gas) from the column 150 can, in some cases, be used as refrigerant for the incoming feed gas instead of (or in addition to) requiring refrigeration duty. However, some embodiments also not shown in FIG. 3 use a condenser with the column for partial or full condensation of the vapor product. In some embodiments, the reboiler 160 duty can be at least partially supplied by integration with the cold box 40 and related streams. Thus, as shown in FIG. 3, at least a portion 49 of the partially condensed mixed phase stream 45 from the cold box 40 can be used to provide at least some of the reboiler 160 duty and then returned as cooled stream 46 bypassing expansion device 120 and be fed to the first phase separator 50. In some embodiments at least a portion 36 of the (warmer) dried stream feed 35 can (also or instead) be used to provide at least some of the reboiler duty, bypassing the cold box as shown in FIG. 3. In some embodiments, the liquid column product 77 can be pumped in at least one pump 80 as liquid to a desired CO₂ product pressure. The pumped CO₂ product 85 can be used to cool down the compressed feed stream 15 before the temperature swing adsorption dryer unit 30 in the first heat exchanger 20 and then recovered as CO₂ product stream 100. In some embodiments not shown in FIG. 3, after or without pumping, the CO₂ stream 85 can be heated to partially cool down the dried gas stream 35, while remaining in liquid phase. In some embodiments also not shown in FIG. 3, the second CO₂-rich condensate 75 (or 85) is recovered as CO₂ product without any refrigeration recovered from the condensate.

The described processes and systems can be used in any field where there is a need for CO₂ removal from a process stream. The disclosure aims to reduce the carbon footprint, and potentially increase the efficiency, of CO₂ removal and/or capture. Some of the benefits of the invention can include a reduction of carbon dioxide emissions, for example from 5 to 99 % (e.g., 80 % to 98 % or from 85 % to 95 %) reduction of all carbon contained in a stream (feed gas). In addition, the described processes and systems can achieve improved efficiencies, such as the use of significantly less external refrigerant and less unit operations and equipment. The described processes and systems can also be modular and have a phased implementation, delivering an advantage for retrofitting existing systems and plants, tailoring the required investment to the targeted CO₂ capture rate while still allowing room for future improvement.

### Integrated Refrigeration Systems and Processes

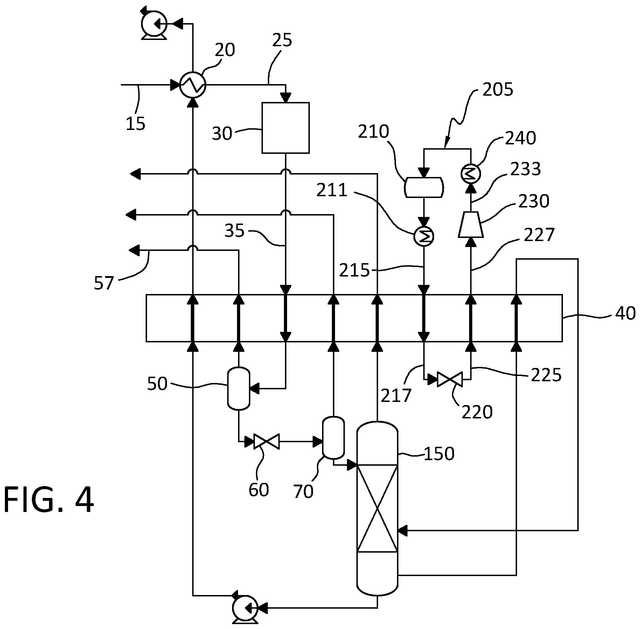

FIG. 4 illustrates some embodiments of the refrigeration circuit 200 of the disclosure. Mixed refrigerant 205 is fed to condenser 210 with heat exchanger 211 and condensed at a high pressure to produce a condensed refrigerant stream 215. In some embodiments, the condenser 210 can be air-cooled or water-cooled. The condensed refrigerant stream 215 can be further subcooled in the cold box 40 to produce a subcooled condensed refrigerant stream 217. Subcooled as used herein can refer to cooling to a temperature below the condensation point such that a stream containing only liquid is obtained. The subcooled condensed refrigerant stream 217 can be expanded to a low pressure with expansion device 220 to produce a mixed phase stream 225 having a sharp temperature decrease to below the (partial) condensation temperature of the warm dried feed gas 35. The mixed phase stream 225 can then be fully evaporated against the warm dried feed gas 35 at low pressure in the cold box 40 to produce an evaporated stream 227. The evaporated stream 227 is then compressed to high pressure in the compressor 230 to produce a compressed stream 233. The compressed stream 233 is cooled back to the condensation temperature in a heat exchanger 240 and returned to the condenser 210 to complete the loop.

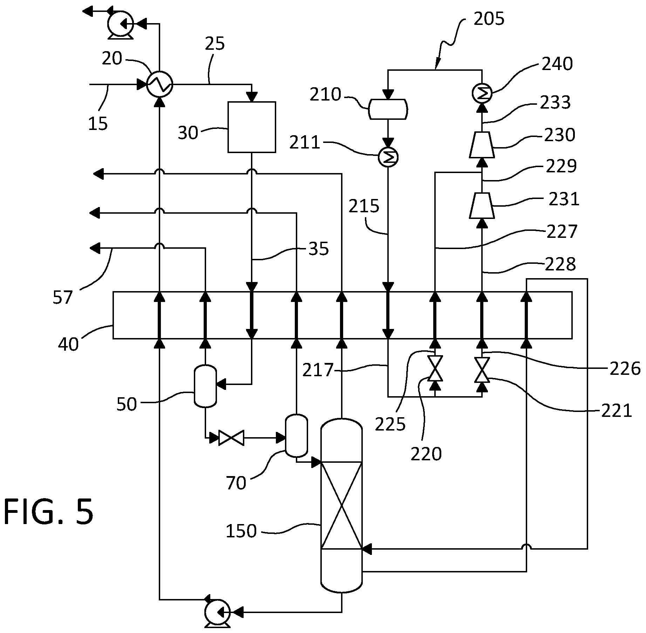

FIG. 5 illustrates some additional embodiments of the refrigeration circuit 200 of the disclosure. Mixed refrigerant 205 is fed to condenser 210 with heat exchanger 211 and condensed at a high pressure to produce a condensed refrigerant stream 215. In some embodiments, the condenser 210 can be air-cooled or water-cooled. The condensed refrigerant stream 215 can be further subcooled in the cold box 40 to produce a subcooled condensed refrigerant stream 217. A first portion of the subcooled condensed refrigerant stream 217 can be expanded to a first low pressure with expansion device 220 to produce a mixed phase stream 225 having a sharp temperature decrease to below the (partial) condensation temperature of the warm dried feed gas 35. At least one additional portion of the subcooled condensed refrigerant stream 217 can be expanded to a second low pressure (e.g., lower than the first low pressure) with expansion device 221 to produce a mixed phase stream 226 at a temperature below the (partial) condensation temperature of the warm dried feed gas 35. In some embodiments not shown in FIG. 5, other portions of the subcooled condensed refrigerant stream 217 can be expanded to different lower pressures (ranging from the lowest pressure to the highest pressure) using expansion devices to produce mixed phase streams at temperatures below the (partial) condensation temperature of the warm dried feed gas 35. In some embodiments, at least one portion of the subcooled condensed refrigerant stream 217 can be expanded to a low pressure to produce a mixed phase stream at a temperature below the (partial) condensation temperature of the warm dried feed gas 35 and is used for cooling, while the other portions of the subcooled condensed refrigerant stream 217 do not (necessarily) achieve a temperature below the (partial) condensation temperature of the warm dried feed gas 35. The mixed phase streams 225 and 226 can then be fully evaporated against the warm dried feed gas 35 at low pressure in the cold box 40 to produce evaporated streams 227 and 228, respectively. The evaporated stream 228 is then compressed to higher pressure in a compressor (stage) 231 to produce a compressed stream 229 that can be combined with higher pressure evaporated stream 227 with the combined stream compressed in a second compressor (stage) 230 to produce a further compressed stream 233 which can, in some embodiments, be the high pressure of the system. In the embodiments not shown in FIG. 5 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop.

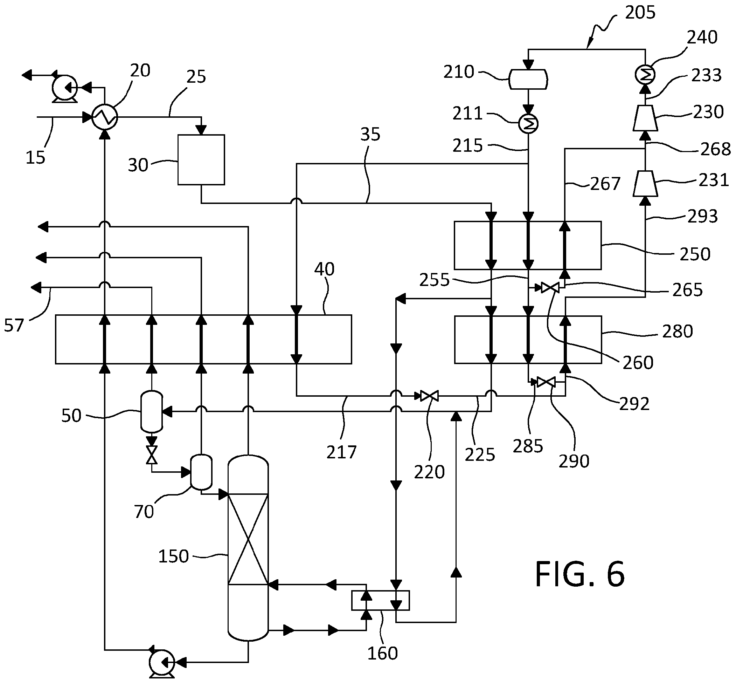

FIG. 6 illustrates some additional embodiments of the refrigeration circuit 200 of the disclosure. Mixed refrigerant 205 is fed to condenser 210 with heat exchanger 211 and condensed at a high pressure to produce a condensed refrigerant stream 215. In some embodiments, the condenser 210 can be air-cooled or water-cooled. A first portion of the condensed refrigerant stream 215 can be further subcooled by cold vapor gases (HP flash gas and/or LP flash gas) from the cold box 40 (first multi-stream heat exchanger) to produce a first subcooled condensed refrigerant stream 217. A second portion of the condensed refrigerant stream 215 is subcooled in a second multi-stream heat exchanger 250 against evaporating refrigerant to produce a second subcooled condensed refrigerant stream 255. A third portion of the condensed refrigerant stream 215, which is shown as part of the second portion, is even further subcooled in a third multi-stream heat exchanger 280 against evaporating refrigerant to form a third subcooled condensed refrigerant stream 285. Warm dried feed gas 35 is cooled (and optionally partially condensed) in the second multi-stream heat exchanger 250 and third multi-stream heat exchanger 280 sequentially. The first subcooled condensed refrigerant stream 217 is expanded to a first low pressure by expansion device 220 to produce a mixed phase stream 225 having a sharp temperature decrease to below the (partial) condensation temperature of the warm dried feed gas 35. The third subcooled condensed refrigerant stream 285 is expanded by expansion device 290 to the same first low pressure as mixed phase stream 225 and then combined with mixed phase stream 225 to produce a combined stream 292. The combined stream 292 is fully evaporated against the dried feed gas 35 in the third multi-stream heat exchanger 280 to produce a combined evaporated stream 293. The second subcooled condensed refrigerant stream 255 is expanded to a second low pressure by expansion device 260 to produce a second mixed phase stream 265 having a sharp temperature decrease to below the (partial) condensation temperature of the warm dried feed gas 35. In some embodiments, at least one portion of the subcooled condensed refrigerant stream 255 can be expanded to a low pressure to produce a mixed phase stream at a temperature below the (partial) condensation temperature of the warm dried feed gas 35 and is used for cooling, while the other portions of the subcooled condensed refrigerant stream do not (necessarily) achieve a temperature below the (partial) condensation temperature of the warm dried feed gas 35. The second mixed phase stream 265 is fully evaporated against the dried feed gas 35 in the second multi-stream heat exchanger 250 to produce an evaporated stream 267. The combined evaporated stream 293 is compressed in a first compressor (stage) 231 to the second low pressure and mixed with the evaporated stream 267 to form a recombined stream 268. The recombined stream 268 is compressed by a second compressor (stage) 230 to produce a further compressed stream 233 which can, in some embodiments, be at the high pressure of the system. In embodiments not shown in FIG. 6 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop. Additionally, where a distillation column 150 is used in the disclosed process, the column reboiler 160 can be integrated with the feed to the third multi-stream heat exchanger 280, bypassing the third multi-stream heat exchanger 280 as shown in FIG. 6, the cold box 40, the second multi-stream heat exchanger 250, the third multi-stream heat exchanger 280, or any combinations thereof, for example.

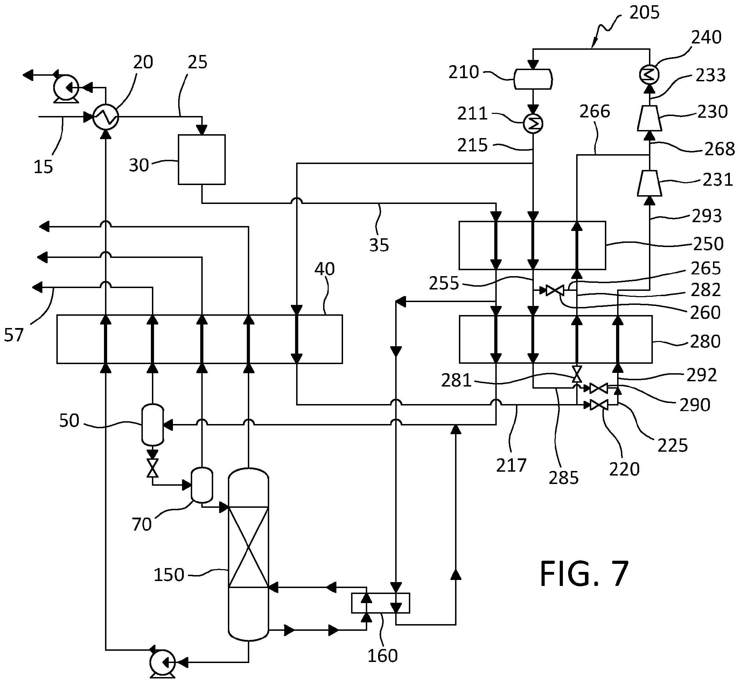

FIG. 7 illustrates some additional embodiments of the refrigeration circuit 200 of the disclosure. Mixed refrigerant 205 is fed to condenser 210 with heat exchanger 211 and condensed at a high pressure to produce a condensed refrigerant stream 215. In some embodiments, the condenser 210 can be air-cooled or water-cooled. A first portion of the condensed refrigerant stream 215 can be further subcooled by cold vapor gases (HP flash gas and/or LP flash gas) from the cold box 40 (first multi-stream heat exchanger) to produce a first subcooled condensed refrigerant stream 217. A second portion of the condensed refrigerant stream 215 is subcooled in a second multi-stream heat exchanger 250 against evaporating refrigerant to produce a second subcooled condensed refrigerant stream 255. A third portion of the condensed refrigerant stream 215, which is shown as part of the second subcooled condensed refrigerant stream 255, is even further subcooled in a third multi-stream heat exchanger 280 against evaporating refrigerant to form a third subcooled condensed refrigerant stream 285. Warm dried feed gas 35 is cooled (and optionally partially condensed) in the second multi-stream heat exchanger 250 and third multi-stream heat exchanger 280 sequentially.

A portion of first subcooled condensed refrigerant stream 217 is expanded to a first low pressure by expansion device 220 to produce a mixed phase stream 225 having a sharp temperature decrease to below the (partial) condensation temperature of the warm dried feed gas 35. The third subcooled condensed refrigerant stream 285 is expanded by expansion device 290 to the same first low pressure as mixed phase stream 225 and then combined with mixed phase stream 225 to produce a combined stream 292.

The remaining portion of first subcooled condensed refrigerant stream 217 is expanded to the second low pressure level by expansion device 281 and heated in the third multi-stream heat exchanger 280 to produce a heated first refrigerant stream 282. The second subcooled condensed refrigerant stream 255 (that is not sent to the third multi-stream heat exchanger) is expanded to a second low pressure by expansion device 260 to produce a second mixed phase stream 265 having a sharp temperature decrease to below the (partial) condensation temperature of the warm dried feed gas 35. In some embodiments, at least one portion of the subcooled condensed refrigerant stream can be expanded to a low pressure to produce a mixed phase stream at a temperature below the (partial) condensation temperature of the warm dried feed gas 35 and is used for cooling, while the other portions of the subcooled condensed refrigerant stream do not (necessarily) achieve a temperature below the (partial) condensation temperature of the warm dried feed gas 35. The heated first refrigerant stream 282 and the second mixed phase stream 265 are combined and fully evaporated against the dried feed gas 35 in the second multi-stream heat exchanger 250 to produce an evaporated stream 266.

The combined stream 292 is fully evaporated against the dried feed gas 35 in the third multi-stream heat exchanger 280 to produce a combined evaporated stream 293. The combined evaporated stream 293 is compressed in a first compressor (stage) 231 to the second low pressure and mixed with the evaporated stream 266 to form a recombined stream 268. The recombined stream 268 is compressed by a second compressor (stage) 230 to produce a further compressed stream 233 which can, in some embodiments, be at the high pressure of the system. In embodiments not shown in FIG. 7 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop. Additionally, where a distillation column 150 is used in the disclosed process, the column reboiler 160 can be integrated with the feed to the third multi-stream heat exchanger 280, bypassing the third multi-stream heat exchanger 280 as shown in FIG. 7, the cold box 40, the second multi-stream heat exchanger 250, the third multi-stream heat exchanger 280, or any combinations thereof, for example.

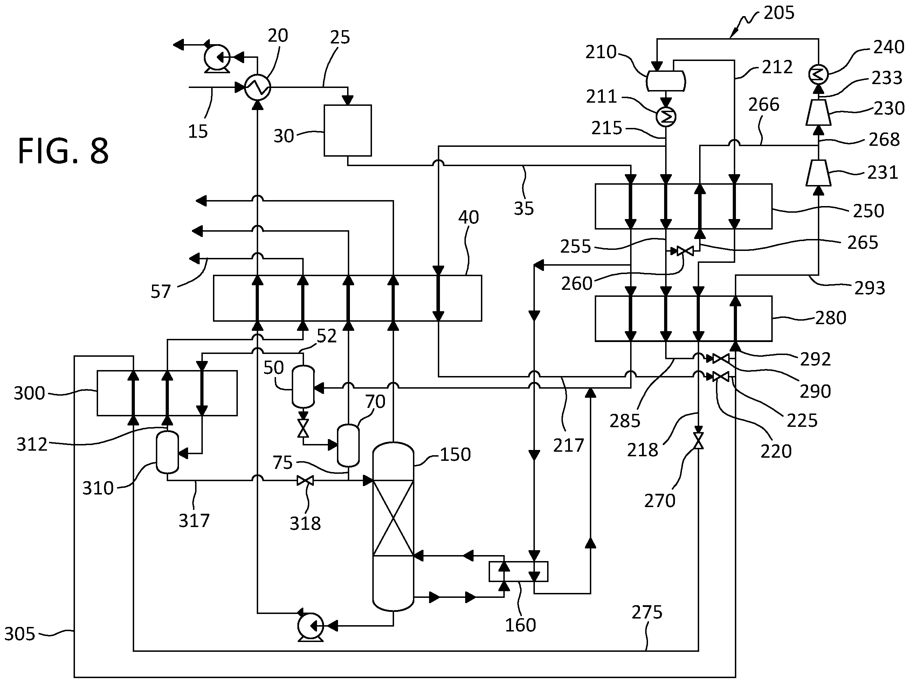

FIG. 8 illustrates some additional embodiments of the refrigeration circuit 200 of the disclosure. Mixed refrigerant 205 is fed to condenser 210 with heat exchanger 211 and partially condensed at a high pressure to produce a first condensed refrigerant stream 215 and a non-condensed refrigerant stream 212. In some embodiments, the condenser 210 can be air-cooled or water-cooled. A first portion of the condensed refrigerant stream 215 can be further subcooled by cold vapor gases (HP flash gas and/or LP flash gas) from the cold box 40 (first multi-stream heat exchanger) to produce a first subcooled condensed refrigerant stream 217. A second portion of the first condensed refrigerant stream 215 is subcooled in a second multi-stream heat exchanger 250 against evaporating refrigerant to produce a second subcooled condensed refrigerant stream 255. A third portion of the first condensed refrigerant stream 215, which is shown as part of the second subcooled condensed refrigerant stream 255, is even further subcooled in a third multi-stream heat exchanger 280 against evaporating refrigerant to form a third subcooled condensed refrigerant stream 285. Warm dried feed gas 35 is cooled (and optionally partially condensed) in the second multi-stream heat exchanger 250 and third multi-stream heat exchanger 280 sequentially. The non-condensed refrigerant stream 212 is sequentially condensed and subcooled in the second multi-stream heat exchanger 250 and the third multi-stream heat exchanger 280 against evaporating refrigerant to produce a second condensed refrigerant stream 218. The second condensed refrigerant stream 218 is expanded in expansion device 270 to a first low pressure to produce an expanded stream 275. The expanded stream 275 is fed to a fourth multi-stream heat exchanger 300 to partially condense the first CO₂-depleted flash gas 52 (HP flash gas) from the first phase separator 50 of the cryogenic system to produce a heated expanded stream 305. This partially condensed stream is separated in a third phase separator 310 of the cryogenic unit to produce a second HP flash gas 312 and a liquid condensate 317. The second HP flash gas 312 is heated sequentially in the fourth multi-stream heat exchanger 300 and the cold box 40 (first multi-stream heat exchanger) and exits the system as warm HP flash gas 57. The liquid condensate 317 is expanded to the pressure of the second phase separator 70 by expansion device 318 and mixed with the second CO₂-rich condensate 75 (liquid phase from second phase separator 70) and directed to either the distillation column 150 if present (as shown in FIG. 8) or the second phase separator 70.

At least a portion (full portion is shown in FIG. 8) of first subcooled condensed refrigerant stream 217 is expanded to approximately the same first low pressure by expansion device 220 to produce a mixed phase stream 225 having a sharp temperature decrease to below the (partial) condensation temperature of the warm dried feed gas 35. The third subcooled condensed refrigerant stream 285 is expanded by expansion device 290 to the same first low pressure as mixed phase stream 225 and then combined with mixed phase stream 225 and heated expanded stream 305 (in any order) to produce a combined stream 292.

The second subcooled condensed refrigerant stream 255 (that is not sent to the third multi-stream heat exchanger 280) is expanded to a second low pressure by expansion device 260 to produce a second mixed phase stream 265 having a sharp temperature decrease to below the (partial) condensation temperature of the warm dried feed gas 35. In some embodiments, at least one portion of the subcooled condensed refrigerant stream 255 can be expanded to a low pressure to produce a mixed phase stream at a temperature below the (partial) condensation temperature of the warm dried feed gas 35 and is used for cooling, while the other portions of the subcooled condensed refrigerant stream do not (necessarily) achieve a temperature below the (partial) condensation temperature of the warm dried feed gas 35. The second mixed phase stream 265 is fully evaporated against the dried feed gas 35 in the second multi-stream heat exchanger 250 to produce an evaporated stream 266.

The combined stream 292 is fully evaporated against the dried feed gas 35 in the third multi-stream heat exchanger 280 to produce a combined evaporated stream 293. The combined evaporated stream 293 is compressed in a first compressor (stage) 231 to the second low pressure and mixed with the evaporated stream 266 to form a recombined stream 268. The recombined stream 268 is compressed by a second compressor (stage) 230 to produce a further compressed stream 233 which can, in some embodiments, be at the high pressure of the system. In embodiments not shown in FIG. 8 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop. Additionally, where a distillation column 150 is used in the disclosed process, the column reboiler 160 can be integrated with the feed to the third multi-stream heat exchanger 280, bypassing the third multi-stream heat exchanger 280 as shown in FIG. 8, the cold box 40, the second multi-stream heat exchanger 250, the third multi-stream heat exchanger 280, or any combinations thereof, for example.

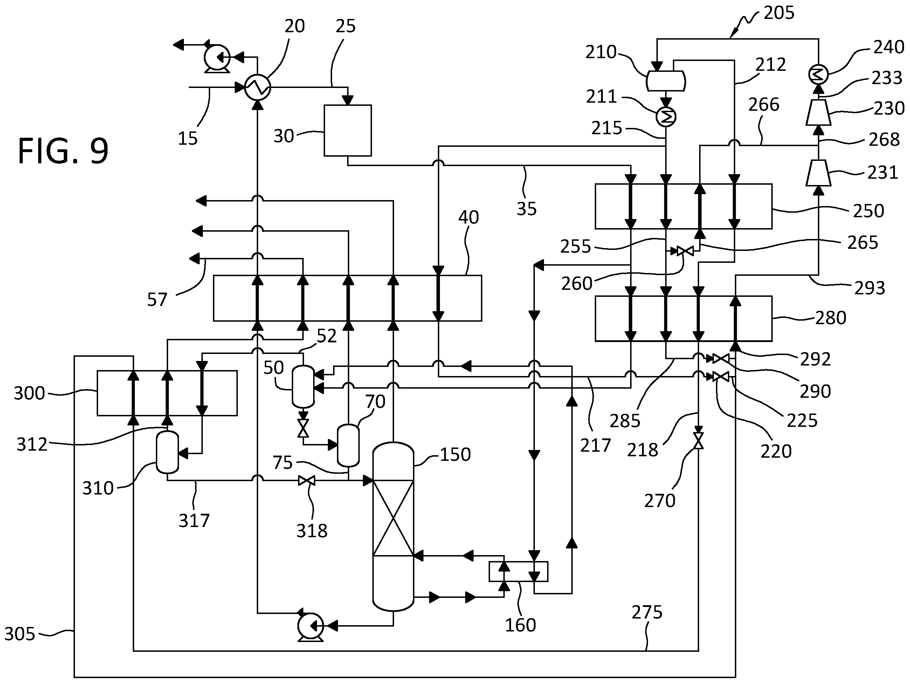

In the embodiments related to FIG. 8 shown in FIG. 9, the column reboiler 160 output (where a distillation column 150 is used in the process) can be integrated with only the first phase separator 50 (e.g., as reflux to the top of the first phase separator 50).

### Refrigerant

In some embodiments, the refrigerant can be any mixed refrigerant combination with two or more components, sufficient to cool down the dried feed stream 35 to temperatures below -35 °C. In some embodiments, the mixed refrigerant can be a light hydrocarbon and CO₂ combination, such that condensation and evaporation condition requirements (e.g., temperature and pressure) are met.

Using CO₂ as mixed refrigerant component in some embodiments can allow for lower requirements for external refrigerant consumption and storage, for example. While CO₂ has been recognized as a refrigerant, CO₂ is typically used in an open-loop refrigeration circuit. In such open-loop refrigeration circuits, at least a portion of a liquid CO₂ product is constantly being evaporated (e.g., against a condensing feed stream) and then treated in a separate unit (liquefaction or compression) or recycled back to a cryogenic unit. For example, an initial amount of CO₂ is used and starts circulating in the refrigerant loop going through the compression, condensation, expansion, and/or evaporation process in a closed circuit, and only a small make-up amount of CO₂ might be used.

The foregoing description of certain examples including the illustrated examples and process simulations above, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples. Any elements (e.g. streams and equipment) shown in any of the figures are not intended to be limiting (e.g., elements shown in some figures and not others) and are only exemplary embodiments. In addition, any reference in the claims to previously-mentioned specific equipment or processes, for example by number, is an example only and for clarity and should not limit the claims to that specific equipment or process.

## Claims

1. A process for recovering CO₂, comprising:
providing a feed stream comprising CO₂,
compressing the feed stream to produce a compressed feed stream comprising CO₂,
optionally cooling the compressed stream comprising CO₂,
optionally drying the compressed feed stream to produce a dried stream comprising CO₂,
cooling the stream comprising CO₂ in a multi-stream heat exchanger to at least partially condense the dried stream into a first liquid condensate stream comprising CO₂ and a first cold gas stream,
separating the first cold gas stream and the first liquid condensate stream,
optionally de-pressurizing the first liquid condensate stream,
optionally cooling the first liquid condensate stream,
evaporating and separating the first liquid condensate stream to produce a second cold gas stream and a second liquid condensate stream
comprising CO₂,
optionally distilling the second liquid condensate stream to produce an overhead stream and a bottoms stream comprising CO₂, and recovering the CO₂ product from the bottoms stream; optionally, wherein the overhead from the distillation is used to subcool the mixed refrigerant.

2. The process for recovering CO₂ of claim 2, further comprising
a. condensing a mixed refrigerant at a first pressure,
b. subcooling the mixed refrigerant below its condensation temperature at the first pressure to produce a subcooled mixed refrigerant,
c. expanding a first portion of the subcooled mixed refrigerant at a second pressure lower than the first pressure, and evaporating the expanded subcooled mixed refrigerant against the dried stream comprising CO₂ to produce a cooled dried stream comprising CO₂, and
d. expanding a second portion of the subcooled mixed refrigerant at a third pressure lower than the second pressure and evaporating the expanded subcooled mixed refrigerant against the cooled dried stream comprising CO₂; and/or

3. The process for recovering CO₂ of claim 2, wherein the mixed refrigerant is subcooled at the first pressure against one or more cold streams comprising at least one of:
a. the first cold gas stream,
b. the second cold gas stream,
c. the second condensate or the bottoms stream from the distillation,
d. the overhead stream of the distillation, or
e. any combinations thereof; optionally, wherein at least a portion of the dried stream comprising CO₂ is further cooled below the minimum refrigeration cycle achievable temperature against at least a portion of the bottom stream from the distillation; further optionally, wherein at least a portion of the subcooled mixed refrigerant is expanded at the third pressure, and evaporated against the first cold gas stream.

4. The process for recovering CO₂ of any one of the preceding claims, further comprising
a. separating the first cold gas stream to generate a first CO₂-depleted stream and a third condensate,
b. heating the first CO₂-depleted stream, and
recovering the third condensate and optionally route the third condensate to the distillation.

5. The process for recovering CO₂ of any one of the preceding claims, further comprising cooling the compressed feed stream using the second liquid condensate stream or the bottoms stream; and/or, further comprising recycling the first cold gas stream, the second cold gas stream, the overhead stream, or any combination thereof to the compression step.

6. A system for recovering CO₂, comprising:
a compressor configured for compressing a feed stream comprising CO₂ to produce a compressed stream comprising CO₂,
optionally a first heat exchanger (20) for cooling the compressed stream comprising CO₂,
optionally a dryer for drying the compressed stream comprising CO₂ to produce a dried stream comprising CO₂,
a cold box (multi-stream heat exchanger) configured for cooling the stream comprising CO₂ and using the refrigeration system, wherein the refrigeration system comprises:
(1) a mixed refrigerant working fluid, comprising at least two components, and
(2) a refrigerant loop with at least two different pressure levels,
a first phase separator configured to produce a first cold gas stream and a first condensate comprising CO₂,
optionally an expansion device configured to expand the first condensate from the first phase separator,
a second phase separator configured to produce a second cold gas stream and a second condensate comprising CO₂, and
optionally a distillation column configured to produce an overhead stream and a bottom stream comprising CO₂.

7. The system for recovering CO₂ of claim 6, wherein the refrigeration system is configured to:
a. condense the mixed refrigerant at a first pressure,
b. subcool the mixed refrigerant below its condensation temperature at the first pressure to produce a subcooled mixed refrigerant,
c. expand a first portion of the subcooled mixed refrigerant at a second pressure lower than the first pressure, and evaporate the expanded subcooled mixed refrigerant against the dried stream comprising CO₂ in a second heat exchanger (250) to produce a cooled dried stream comprising CO₂, and
d. expand a second portion of the subcooled mixed refrigerant at a third pressure lower than the second pressure, and evaporate the expanded subcooled mixed refrigerant against the cooled dried stream comprising CO₂ in a third heat (280) exchanger, and wherein the second (250) and third (280) heat exchangers are arranged sequentially.

8. The system for recovering CO₂ of claim 7, wherein the refrigeration system is configured to subcool a part of the mixed refrigerant at the first pressure in a fourth heat exchanger (40) against one or more cold streams recovered from the system for recovering CO₂, the cold streams comprising at least one of:
a. the first cold gas stream from the first phase separator,
b. the second cold gas stream from the second phase separator,
c. the second condensate or the bottoms stream from the distillation column,
d. optionally, the overhead of the distillation column, or
e. any combinations thereof.

9. The system for recovering CO₂ of claim 8, wherein the refrigeration system is configured to:
- further cool at least a portion of the dried stream comprising CO₂ below the minimum refrigeration cycle achievable temperature against at least a portion of the bottom stream from the distillation column in a fifth heat exchanger (160), and
- return the cooled portion of the dried stream to the top of the phase separator as reflux.

10. The system for recovering CO₂ of claim 9, wherein the refrigeration system is configured to expand at least a portion of the subcooled mixed refrigerant at the third pressure, and evaporate the expanded subcooled mixed refrigerant against the first cold gas stream from the first separator in a sixth heat exchanger (300); optionally, wherein the refrigeration system is configured to:
a. separate the first cold gas stream from the first phase separator in a third phase separator to generate a first CO₂-depleted stream and a third condensate,
b. heat the first CO₂-depleted stream in the sixth heat exchanger (300), and
c. recover the third condensate and optionally route the third condensate to the distillation column.

11. The system for recovering CO₂ of any one of claims 10-14, wherein the mixed refrigerant comprises CO₂; and/or wherein the distillation column is operated without an overhead condenser.

12. The system for recovering CO₂ of any one of claims 10 or 11, wherein the system further comprises a pump configured to pump the second condensate or a bottoms stream from the distillation column.

13. The system for recovering CO₂ of any one of claims 10-12, wherein the cold box and first phase separator are configured to at least partially condense CO₂ in a single stage.

14. The system for recovering CO₂ of any one of claims 10-13, wherein the dryer is a temperature swing adsorption dryer, preferably comprising an adsorbent comprising a molecular sieve, zeolite, aluminosilicate, silica gel, activated carbon, or any combinations thereof; and/or wherein the compressor is a multi-stage compressor with intercooling.

15. The system for recovering CO₂ of any one of claims 10-14, wherein the first heat exchanger (20) is configured to use at least a part of the second condensate from the second phase separator or the bottoms stream from the distillation column to chill the compressed CO₂ containing stream.
